# FASCICULE DE BREVET EUROPEEN

(11) **EP 0 949 105 B1**
(45) Date de publication et mention de la délivrance du brevet: **02.10.2002**
(21) Numéro de dépôt: 99400864.7
(22) Date de dépôt: 08.04.1999
(51) Int. Cl.: B60J 7/20

(54) **Coffre arrière pour véhicule découvrable à toit repliable, comprenant une malle arrière et une plage arrière**
Kofferraum für Cabriofahrzeug mit Faltverdeck und mit einem hinteren Kofferraumdeckel und Platte ausgerüstet
Rear trunk for convertible vehicle with foldable top, having rear trunk lid and panel

(30) Priorité: 09.04.1998 FR 9804475
(43) Date de publication de la demande: 13.10.1999
(73) Titulaire: Société Européenne de Brevets Automobiles, 75011 Paris (FR)
(72) Inventeur: Queveau, Gérard, Le Pin, 79140 Cerizay (FR); Queveau, Paul, Montravers, 79140 Cerizay (FR); Guillez, Jean-Marc, Cirières, 79140 Cerizay (FR)
(74) Mandataire: Keib, Gérard

(56) Documents cités:
- EP-A- 0 949 103
- DE-A- 3 743 502
- DE-A- 19 737 259
- DE-C- 4 445 941
- US-A- 3 338 624
- US-A- 6 142 555

## Description

La présente invention concerne un coffre arrière pour véhicule découvrable à toit repliable selon le préambule des revendications indépendantes 1 et 3, comprenant, en particulier selon le préambule de la revendication n°1, une malle arrière pouvant s'ouvrir de l'avant vers l'arrière pour le passage et le rangement du toit replié.

On connaît, d'après le DE-A-4445941, un coffre arrière de ce type qui comporte une plaque montée de manière pivotante à l'extrémité d'un bras oscillant sous la malle arrière, de manière à fermer, lorsque le toit est dans sa position repliée, l'espace compris entre le bord avant de la malle arrière et les sièges arrière. Il n'est pas fait mention d'une quelconque plage arrière fermant, lorsque le toit est en position sur le véhicule, l'espace compris entre le bord avant de la malle arrière et les sièges arrière.

On connaît en outre selon le brevet français 2 728 199, un dispositif du genre ci-dessus, dans lequel la plage arrière pivote vers l'avant et vers le bas, lorsque le toit est déplacé vers le coffre arrière, après ouverture de la malle arrière de l'avant vers l'arrière.

Un tel dispositif nécessite de nombreuses pièces compliquées articulées les unes aux autres.

Le but de la présente invention est de remédier à cet inconvénient.

Suivant l'invention, le coffre arrière du type précité est caractérisé en ce qu'il comporte une plage arrière s'étendant sous la partie-arrière du toit en position sur le véhicule en fermant l'espace compris entre le bord avant de la malle arrière et une paroi qui ferme l'avant du coffre, et en ce que ladite plage arrière est fixée de façon articulée au bord avant de la malle arrière et est mobile entre une position où elle s'étend entre le bord avant de la malle arrière et une paroi qui ferme l'avant du coffre, et une position repliée où elle s'étend sous la malle arrière.

La plage arrière sépare ainsi l'habitacle du véhicule du coffre arrière de ce dernier.

La plage arrière étant solidaire de la malle arrière, cette plage repliée vers cette dernière suit le mouvement d'ouverture et de fermeture de la malle, tout en libérant complètement l'accès au coffre pour les bagages ou le toit repliable.

Selon une autre version de la présente invention, le coffre arrière pour véhicule découvrable à toit repliable est caractérisé en ce qu'il comprend une malle arrière fixée de façon articulée à l'avant du coffre pour pouvoir s'ouvrir de l'arrière vers l'avant pour le passage et le rangement du toit replié, d'une part, et, d'autre part, pour le rangement de bagages, la malle arrière comprenant en outre une plage arrière fixée de façon articulée au bord avant de la malle arrière et mobile entre une position où elle s'étend entre le bord avant de la malle arrière et une paroi qui ferme l'avant du coffre et une position repliée où elle s'étend sous la malle arrière lorsque le toit est en position sur le véhicule, la partie arrière du toit repliable comprenant une deuxième paroi qui, lorsque le toit est en position sur le véhicule, ferme l'espace compris entre le bord avant de la malle arrière et ladite paroi qui ferme l'avant du coffre.

Selon une version avantageuse de l'invention, la plage arrière est fixée de façon articulée au bord avant de la malle arrière au moyen d'au moins un élément coudé en forme de col de cygne.

D'autres particularités et avantages de l'invention apparaîtront encore dans la description ci-après.

Aux dessins annexés donnés à titre d'exemples non limitatifs :
- la figure 1 est une vue en coupe longitudinale partielle d'un véhicule découvrable comprenant un coffre arrière conforme à l'invention ;
- la figure 2 est une vue en coupe longitudinale partielle du coffre arrière, le toit étant rangé dans ce coffre ;
- la figure 3 est une vue en perspective montrant les organes pour commander le pivotement de la plage arrière ;
- la figure 4 est une vue partielle à plus grande échelle du détail de l'articulation de la plage arrière à la malle arrière ;
- la figure 5 est une vue analogue à la figure 1 montrant une autre version de l'invention ;
- la figure 6 est une vue en perspective montrant la partie arrière du toit repliable de la version selon la figure 5 ;
- la figure 7 est une vue en coupe longitudinale partielle du coffre arrière selon la version de la figure 5, le toit étant rangé dans le coffre.

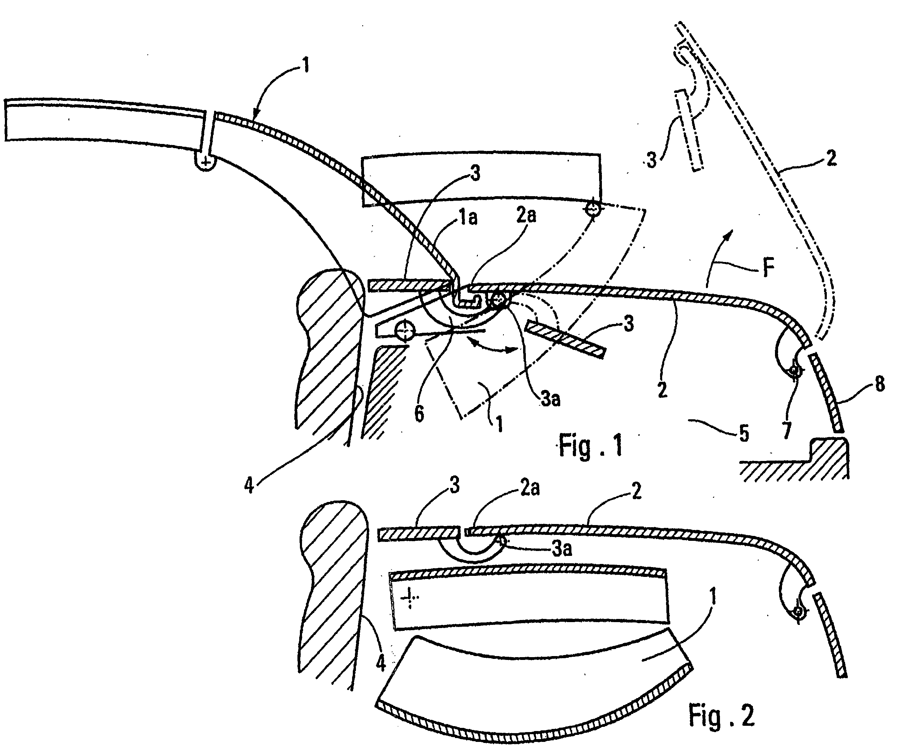

En référence à la figure 1, le coffre arrière pour véhicule découvrable à toit repliable 1, comprend une malle arrière 2 pouvant s'ouvrir d'une part, pour le passage et le rangement du toit replié 1 et d'autre part pour le rangement de bagages.

Le coffre arrière comprend en outre une plage arrière 3 s'étendant sous la partie arrière la du toit 1 en position sur le véhicule. Cette plage arrière 3 peut se replier pour permettre le passage du toit replié 1.

Conformément à l'invention, la plage arrière 3 est fixée de façon articulée en 3a au bord avant 2a de la malle arrière 2 et est mobile entre une position où elle s'étend entre le bord avant 2a de la malle arrière 2 et une paroi 4 qui ferme l'avant du coffre 5, et une position repliée où elle s'étend sous la malle arrière 2.

Dans l'exemple représenté, la plage arrière 3 est fixée de façon articulée au bord avant 2a de la malle arrière 2 au moyen d'au moins un élément coudé 6 en forme de col de cygne.

Dans la version représentée sur les figures 1 et 2, la malle arrière 2 est fixée de façon articulée en 7 à la partie arrière 8 du coffre pour pouvoir s'ouvrir de l'avant vers l'arrière, comme indiqué par la flèche F.

Dans la version ci-dessus, il est prévu des moyens pour commander successivement :
- le pivotement de la plage arrière 3 pour la replier sous la malle arrière 2 ;
- l'ouverture de la malle arrière 2 par rotation de l'avant vers l'arrière ;
- le repliage et le rangement du toit replié 2 à l'intérieur du coffre 5 ;
- le dépliage de la plage arrière 3 vers l'avant (voir figure 2) pour fermer l'espace compris entre le bord avant 2a de la malle arrière 2 et la paroi 4 qui ferme l'avant du coffre 5 ;
- la fermeture de la malle arrière 2.

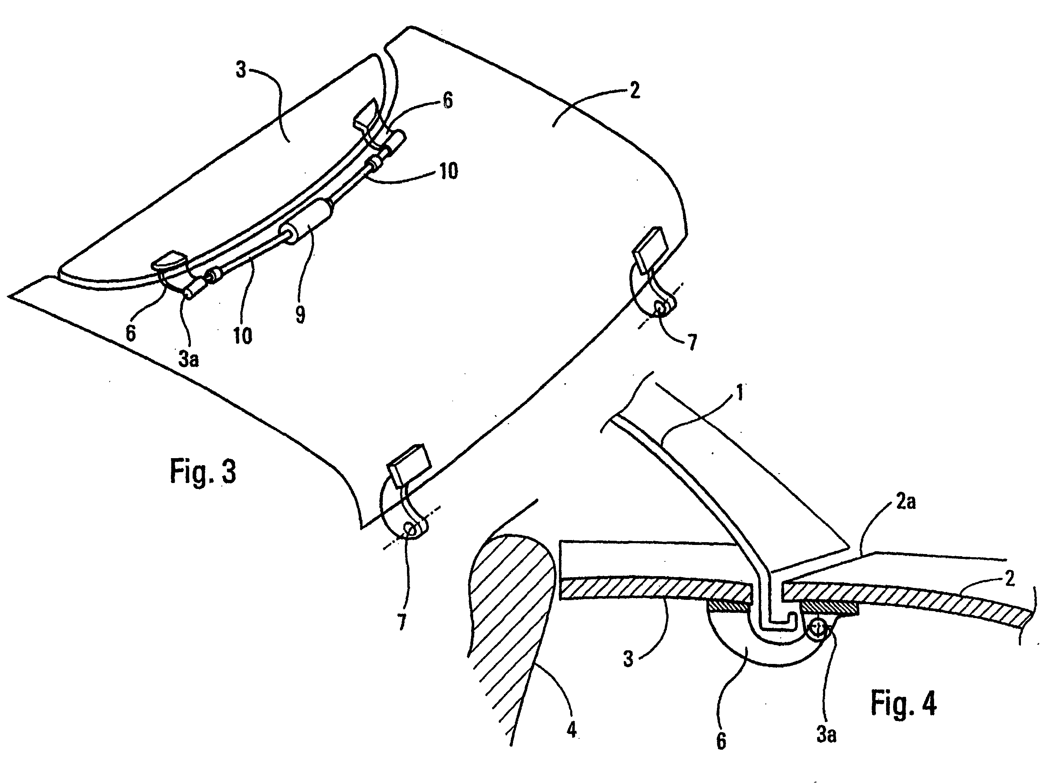

La figure 3 montre que le pivotement de la plage arrière 3 est commandé par un moteur électrique 9 accouplé à deux arbres 10 reliés à l'axe de rotation 3a des éléments 6 en forme de col de cygne.

Le pivotement de la malle arrière 2 dans le sens de la flèche F de la figure 1 est commandé par un vérin (non représenté sur les figures).

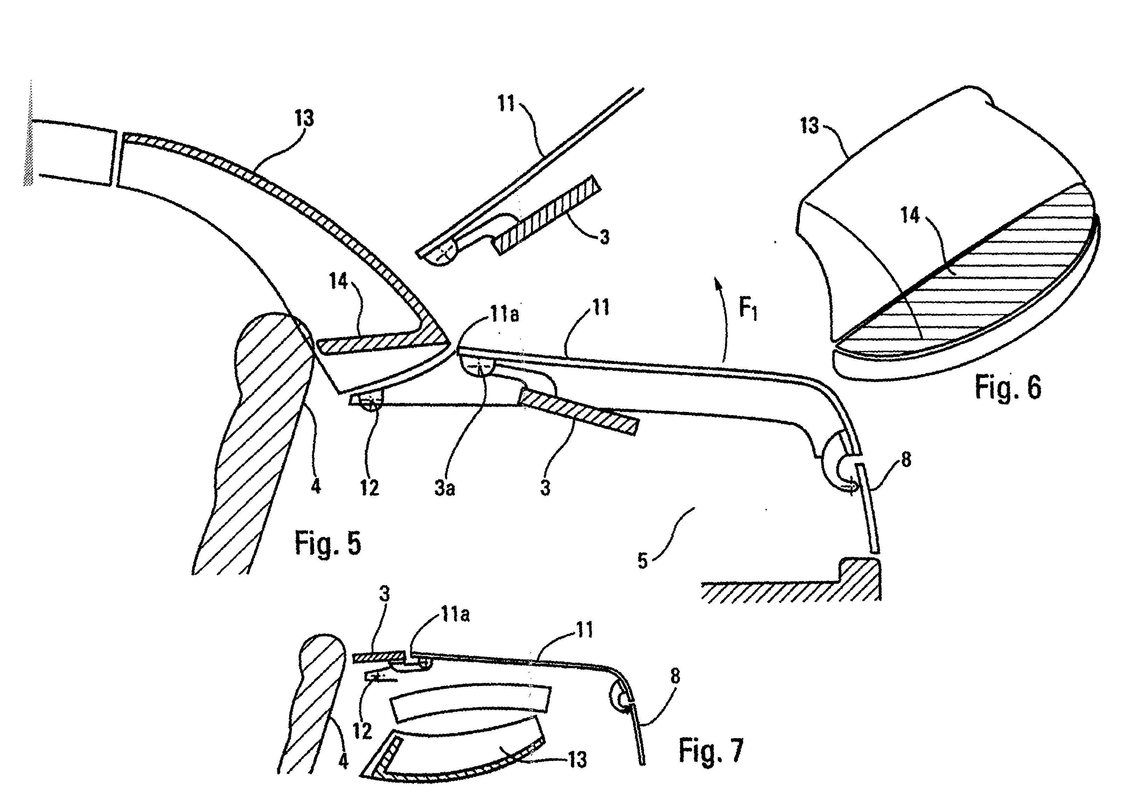

Dans la version représentée sur les figures 5 à 7, la malle arrière 11 est fixée de façon articulée en 12 à l'avant du coffre 5 pour pouvoir s'ouvrir de l'arrière vers l'avant, dans le sens de la flèche F₁.

Dans cette version, la partie arrière du toit repliable 13 comprend une deuxième paroi 14 qui ferme l'espace compris entre le bord avant 11a de la malle arrière 11 et la paroi 4 qui ferme l'avant du coffre 5.

Lorsque le toit 13 est en position sur le véhicule, la plage arrière 3 articulée en 3a sous le bord avant 11a de la malle arrière 11 est repliée sous cette dernière, comme indiqué sur la figure 5.

Dans cette position, l'arrière de la malle arrière 11 est verrouillé à la partie arrière 8 du coffre 5.

Dans la version ci-dessus, il est prévu des moyens pour commander successivement :
- l'ouverture de la malle arrière 11, la plage arrière 3 étant repliée sous cette malle 11, par rotation de ladite malle 11 de l'arrière vers l'avant,
- le repliage et le rangement du toit replié 13 à l'intérieur du coffre 5,
- le dépliage de la plage arrière 3 vers l'avant pour fermer l'espace compris entre le bord avant 11a de la malle arrière et la paroi 4 qui ferme l'avant du coffre 5, comme indiqué sur la figure 7 ;
- la fermeture de la malle arrière 2.

Le pivotement de la plage arrière 3 peut être commandé par un moteur électrique accouplé à l'axe 3a.

Le pivotement de la malle arrière 11 autour de l'articulation 12 peut être commandé par un vérin.

Bien entendu, l'invention n'est pas limitée à l'exemple que l'on vient de décrire et on peut apporter à celui-ci de nombreuses modifications sans sortir du cadre de l'invention.

## Revendications

1. Coffre arrière pour véhicule découvrable à toit repliable (1) comprenant une malle arrière (2) fixée de façon articulée à la partie arrière (8) du coffre (5) pour pouvoir s'ouvrir de l'avant vers l'arrière pour le passage et le rangement du toit replié (1), **caractérisé en ce qu'**il comporte une plage arrière (3) s'étendant sous la partie arrière du toit (1) en position sur le véhicule, en fermant l'espace compris entre le bord avant (2a) de la malle arrière (2) et une paroi (4) qui ferme l'avant du coffre (5), et pouvant se replier pour permettre le passage du toit replié, et **en ce que** ladite plage arrière (3) est fixée de façon articulée au bord avant (2a) de la malle arrière (2) et est mobile entre une position où elle s'étend entre le bord avant (2a) de la malle arrière (2) et ladite paroi (4) qui ferme l'avant du coffre (5), et une position repliée où elle s'étend sous la malle arrière (2).

2. Coffre arrière conforme à la revendication 1, **caractérisé en ce qu'**il comprend des moyens pour commander successivement :
- le pivotement de la plage arrière (3) pour la replier sous la malle arrière (2) ;
- l'ouverture de la malle arrière (2) par rotation de l'avant vers l'arrière;
- le repliage et le rangement du toit replié (1) à l'intérieur du coffre (5) ;
- le dépliage de la plage arrière (3) vers l'avant pour pouvoir fermer l'espace compris entre le bord avant (2a) de la malle arrière (2) et ladite paroi (4) qui ferme l'avant du coffre (5) ;
- la fermeture de la malle arrière (2).

3. Coffre arrière pour véhicule découvrable à toit repliable (13), **caractérisé en ce qu'**il comprend une malle arrière (11) fixée de façon articulée à l'avant du coffre (5) pour pouvoir s'ouvrir de l'arrière vers l'avant pour le passage et le rangement du toit replié (13), d'une part, et, d'autre part, pour le rangement de bagages, la malle arrière (11) comprenant en outre une plage arrière (3) fixée de façon articulée au bord avant (11a) de la malle arrière (11) et mobile entre une position où elle s'étend entre le bord avant (11a) de la malle arrière (11) et une paroi (4) qui ferme l'avant du coffre (5), et une position repliée où elle s'étend sous la malle arrière (11) lorsque le toit (13) est en position sur le véhicule, la partie arrière du toit repliable (13) comprenant une deuxième paroi (14) qui, lorsque le toit (13) est en position sur le véhicule, ferme l'espace compris entre le bord avant (11a) de la malle arrière (11) et ladite paroi (4) qui ferme l'avant du coffre (5).

4. Coffre arrière conforme à la revendication 3, **caractérisé en ce qu'**il comprend des moyens pour commander successivement :
- l'ouverture de la malle arrière (11), de l'arrière vers l'avant, la plage arrière (3) étant repliée sous cette malle, par rotation de ladite malle arrière (11) de l'arrière vers l'avant,
- le repliage et le rangement du toit replié (13) à l'intérieur du coffre (5),
- le dépliage de la plage arrière (3) vers l'avant pour fermer l'espace compris entre le bord avant (11a) de la malle arrière (11) et ladite paroi (4) qui ferme l'avant du coffre (5),
- la fermeture de la malle arrière (2).

5. Coffre arrière conforme à l'une quelconque des revendications précédentes, **caractérisé en ce que** la plage arrière (3) est fixée de façon articulée au bord avant (2a, 11a) de la malle arrière (2, 11) au moyen d'au moins un élément coudé (6) en forme de col de cygne.

## Patentansprüche

1. Hinterer Kofferraum für Cabriofahrzeug mit zusammenfaltbarem Dach (1) mit einem hinteren Kofferraumdeckel (2), der in gelenkiger Weise an dem hinteren Bereich (8) des Kofferraumes befestigt ist, um von vorne nach hinten für den Durchlass und das Verstauen des zusammengefalteten Daches (1) geöffnet werden zu können, **dadurch gekennzeichnet, dass** er eine Ablagenplatte (3) aufweist, die sich unter dem hinteren Bereich des Daches (1) in seiner Position auf dem Fahrzeug erstreckt, wobei sie den Raum zwischen der Vorderkante (2a) des hinteren Kofferraumdeckels (2) und einer Wand (4), die den vorderen Bereich des Kofferraumes (5) abschließt, verschließt, und wobei sie sich zusammenklappen kann, um den Durchlass des zusammengefalteten Daches zu ermöglichen, und dass die Ablagenplatte (3) in gelenkiger Weise an der Vorderkante (2a) des hinteren Kofferraumdeckels (2) befestigt und beweglich ausgebildet ist zwischen einer Position, in der sie sich zwischen der Vorderkante (2a) des hinteren Kofferraumdeckets (2) und der Wand (4), die den vorderen Bereich des Kofferraumes (5) abschließt, erstreckt, und einer zusammengelegten Position, in der sie sich unter dem hinteren Kofferraumdeckel (2) erstreckt.

2. Hinterer Kofferraum gemäß Anspruch 1, **dadurch gekennzeichnet, dass** er Vorrichtungen aufweist, um hintereinander steuern zu können:
- das Schwenken der Ablagenplatte (3), um sie unter dem hinteren Kofferraumdeckel (2) zusammenzulegen;
- das Öffnen des hinteren Kofferraumdeckels (2) durch Drehung von vorne nach hinten;
- das Zusammenfalten und das Verstauen des zusammengefalteten Daches (1) im Inneren des Kofferraumes (5);
- das Auseinanderziehen der Ablagenplatte (3) nach vorne, um den Raum zwischen der Vorderkante (2a) des hinteren Kofferraumdeckels (2) und der Wand (4), die den vorderen Bereich des Kofferraumes (5) schließt, zu verschließen;
- das Schließen des hinteren Kofferraumdeckels (2).

3. Hinterer Kofferraum für Cabriofahrzeug mit zusammenfaltbarem Dach (13), **dadurch gekennzeichnet, dass** er einen hinteren Kofferraumdeckel (11) aufweist, der in gelenkiger Weise an dem vorderen Bereich des Kofferraumes (5) befestigt ist, um von hinten nach vorne geöffnet zu werden für den Durchlass und das Verstauen des zusammengefalteten Daches (13) einerseits und für das Verstauen von Gepäck andererseits, wobei der hintere Kofferraumdeckel (11) außerdem eine Ablagenplatte (3) aufweist, die in gelenkiger Weise an der Vorderkante (11a) des hinteren Kofferraumdeckels (11) befestigt und beweglich ausgebildet ist zwischen einer Position, in der sie sich zwischen der Vorderkante (11a) des hinteren Kofferraumdeckels (11) und einer Wand (4), die den vorderen Bereich des Kofferraumes (5) abschließt, erstreckt, und einer zusammengelegten Position, in der sie sich unter dem hinteren Kofferraumdeckel (11) erstreckt, wenn sich das Dach (13) in seiner Position auf dem Fahrzeug befindet, wobei der hintere Bereich des zusammenfaltbaren Daches (13) eine zweite Wand (14) aufweist, die, wenn sich das Dach (13) in seiner Position auf dem Fahrzeug befindet, den Raum zwischen der Vorderkante (11a) des hinteren Kofferraumdeckels (11) und der Wand (4), die den vorderen Bereich des Kofferraumes (5) abschließt, verschließt.

4. Hinterer Kofferraum gemäß Anspruch 3, **dadurch gekennzeichnet, dass** er Vorrichtungen aufweist, um hintereinander zu steuern:
- das öffnen des hinteren Kofferraumdeckels (11) von hinten nach vorne, wobei die Ablagenplatte (3) unter diesem Kofferraumdeckel zusammengelegt ist, durch Drehung des hinteren Kofferraumdeckels (11) von hinten nach vorne,
- das Zusammenfalten und das Verstauen des zusammengefalteten Daches (13) im Inneren des Kofferraumes (5),
- das Auseinanderziehen der Ablagenplatte (3) nach vorne, um den Raum zwischen der Vorderkante (11a) des hinteren Kofferraumdeckels (11) und der Wand (4), die den vorderen Bereich des Kofferraumes (5) schließt, zu verschließen,
- das Schließen des hinteren Kofferraumdeckels (11).

5. Hinterer Kofferraum gemäß irgendeinem der vorherigen Ansprüche, **dadurch gekennzeichnet, dass** die Ablagenplatte (3) in gelenkiger Weise an der Vorderkante (2a, 11 a) des hinteren Kofferraumdeckels (2, 11) mittels wenigstens eines knieförmigen Elementes (6) in Form eines C-Gestells befestigt ist.

## Claims

1. A rear boot for a convertible-type vehicle with folding roof (1) comprising a rear boot lid (2) fixed in an articulated manner to the rear portion (8) of the boot (5) so as to allow it to be opened from the front towards the rear so that the folded roof (1) can move into said boot for stowing, **characterized in that** it has a rear parcel shelf (3) extending underneath the rear portion of the roof (1), when the latter is in position on the vehicle, so as to close the space between the front edge (2a) of the rear boot lid (2) and a partition (4) which closes off the front of the boot (5), and being able to swivel back to allow the folded roof to move into the boot, and **in that** said rear parcel shelf (3) is fixed in an articulated manner to the front edge (2a) of the rear boot lid (2) and can move between a position in which it extends between the front edge (2a) of the rear boot lid (2) and said partition (4) which closes off the front of the boot (5), and a position in which it is swivelled back to extend underneath the rear boot lid (2).

2. A rear boot according to Claim 1, **characterized in that** it includes control means for successively:
- pivoting the rear parcel shelf (3) so that it drops back underneath the rear boot lid (2);
- opening the rear boot lid (2) by rotating it from the front towards the rear;
- folding and stowing the folded roof (1) inside the boot (5);
- swivelling the rear parcel shelf (3) back towards the front so as to be able to close the space between the front edge (2a) of the rear boot lid (2) and said partition (4) which closes off the front of the boot (5);
- closing the rear boot lid (2).

3. A rear boot for a convertible-type vehicle with folding roof (13), **characterized in that** it comprises a rear boot lid (11) fixed in an articulated manner to the front of the boot (5) so as to allow it to be opened from the rear towards the front, on the one hand for movement of the folded roof (13) into the boot for stowing and on the other hand for stowing luggage, the rear boot lid (11) also comprising a rear parcel shelf (3) which is fixed in an articulated manner to the front edge (11a) of the rear boot lid (11) and can move between a position in which it extends between the front edge (11a) of the rear boot lid (11) and a partition (4) which closes off the front of the boot (5), and a position in which it is swivelled back to extend underneath the rear boot lid (11) when the roof (13) is in position on the vehicle, the rear portion of the folding roof (13) including a second partition (14) which, when the roof (13) is in position on the vehicle, closes the space between the front edge (11a) of the rear boot lid (11) and said partition (4) which closes off the front of the boot (5).

4. A rear boot according to Claim 3, **characterized in that** it includes control means for successively:
- opening the rear boot lid (11), from the rear towards the front, the rear parcel shelf (3) being in its position underneath this boot lid, by rotating said rear boot lid (11) from the rear towards the front,
- folding and stowing the folded roof (13) inside the boot (5),
- swivelling the rear parcel shelf (3) towards the front for closing the space between the front edge (11a) of the rear boot lid (11) and said partition (4) which closes off the front of the boot (5),
- closing the rear boot lid (2).

5. A rear boot according to any one of the preceding claims, **characterized in that** the rear parcel shelf (3) is fixed in an articulated manner to the front edge (2a, 11a) of the rear boot lid (2, 11) by means of at least one goose-necked element (6).
